# EUROPEAN PATENT SPECIFICATION

(11) **EP 0 307 448 B1**
(45) Date of publication and mention of the grant of the patent: **17.02.1993**
(21) Application number: 88903101.9
(22) Date of filing: 18.03.1988
(51) Int. Cl.: G06F 9/38

(54) **APPARATUS AND METHOD FOR SYNCHRONIZATION OF ARITHMETIC EXCEPTIONS IN PARALLEL PIPELINED EXECUTION UNITS**
VORRICHTUNG UND VERFAHREN ZUR SYNCHRONISATION VON ARITHMETISCHEN EXCEPTIONEN IN PARALLELEN PIPELINE-AUSFÜHRUNGSEINHEITEN
APPAREIL ET PROCEDE SERVANT A LA SYNCHRONISATION D'EXCEPTIONS ARITHMETIQUES DANS DES UNITES D'EXECUTION EN PARALLELE A TRAITEMENT ''PIPELINE''

(30) Priority: 20.03.1987 US 28248
(43) Date of publication of application: 22.03.1989
(73) Proprietor: DIGITAL EQUIPMENT CORPORATION, Maynard Massachusetts 01745-1418 (US)
(72) Inventor: CUTLER, David, N., Bellevue, WA 98004 (US); ORBITS, David, A., Redmond, WA 98052 (US); BHANDARKAR, Dileep, Shrewsbury, MA 01545 (US); CARDOZA, Wayne, Merrimack, NH 03054 (US); WITEK, Richard, T., Littleton, MA 01460 (US)
(74) Representative: Goodman, Christopher
(86) International application number: US8800815
(87) International publication number: WO8807239

(56) References cited:
- Journal of VLSI and Computer Sciences, vol. 1 no. 2, 1984 (Rockville, Maryland, US) S.A. Przybylski et al.: "Organization and VLSI implementation of MIPS", pages 170-208
- MC68020 32-Bit Microprocessor User's Manual, 2nd Edition, 1985, Prentice-Hall Inc. (Englewood Cliffs, US) section 6, "Processing States", pages 6-1 - 6-15
- 12th Annual International Symposium on Computer Architecture; Boston, US 17-19 June 1985, IEEE Computer Society, (New York, US), J.E. Smith et al.: "Implementation of precise interrupts in pipelined processors", pages 36-44
- COMPUTER STRUCTURES: Principles and Examples", D.P. Siewiorek et al., McGraw-Hill, 1983, pages 623-633.
- "COMPUTER ARCHITECTURE, A QUANTITATIVE APPROACH", J.L. Hennessy and D.A. Patterson, Morgan Kaufmann, San Mateo CA, 1990, pages 214-216.

## Description

### RELATED APPLICATIONS

This application is related to the following Patent Applications, all of which were filed in the U.S. Patent and Trademark Office on the filing date of the present Patent Application.

APPARATUS AND METHOD FOR RECOVERING FROM MISSING PAGE FAULTS IN VECTOR DATA PROCESSING OPERATIONS invented by David N. Cutler, David A. Orbits, Dileep Bhandarkar, Wayne Cardoza and Richard T. Witek; having publication no. 0297893.

APPARATUS AND METHOD FOR PROVIDING AN EXTENDED PROCESSING ENVIRONMENT FOR NON-MICRODED DATA PROCESSING SYSTEMS invented by David N. Cutler, David A. Orbits, Dileep Bhandarkar, Wayne Cardoza and Richard T. Witek; having publication no. 0301707.

### BACKGROUND OF THE INVENTION

### 1. Field of the Invention

This invention relates generally to data processing systems and more particularly to data processing systems in which the system architecture permits parallel execution of a plurality of instructions.

During the operation of the data processing system, events can occur within the system that require the execution of a procedure that is outside the explicit activity required for the completion of the currently executing program. When the events are relevant primarily to the currently executing program, the system response typically is to invoke a software procedure which is executed in the same context as the current program. The notification of such an event is termed an exception. When the event is primarily relevant to other software procedures or to the system as a whole, the response must be processed in a system-wide context. The notification of this latter type event is termed an interrupt. This invention relates to a set of exceptions referred to as arithmetic exceptions.

### 2. Description of the Related Art

In order to achieve high performance in a data processing system, one technique is to provide apparatus for executing a plurality of instructions in parallel (i.e., instructions whose execution overlap in time). However, when one or more of the currently executing instructions results in an arithmetic exception, such as an integer overflow, exponent overflow or underflow, etc, the determination of the exact location of the instruction that produced the arithmetic exception can be extremely difficult. In addition, the diversity of possible exception origins complicates the creation of a software environment for efficiently responding to the arithmetic exceptions.

Computer architectures, such as the DEC VAX data processing systems and the IBM System/370 data processing systems respond to an arithmetic exception by aborting all instructions that were initiated after the first instruction to signal an exception condition. For a multiplicity of reasons, such as the differences in instruction execution speed, this technique is difficult to implement in the parallel execution of.multiple instructions environment.

Other high performance data processing architectures, such as the CDC-7600 data processing system and the Cray-1, Cray-XMP and the Cray-2 data processing systems simply stop executing instructions at a convenient point in the program environment and provide no method for identifying instructions that signalled an exception condition. In addition, these architectures provide no mechanism for synchronizing the instruction execution with an environment created to respond to the identification of an arithmetic exception.

From 12th Annual International Symposium on Computer Architecture, Boston, US, 17-19 June 1985, IEEE Computer Society, J E Smith et al: "Implementation of precise interrupts in pipelined processors", p36-44, and from "Computer Structures: Principles and Examples", D P Siewiorek et al, McGraw-Hill, 1983, p623-633, it is known to halt issuing instructions once an interrupt condition is detected, and to identify interrupt service routines by testing the interrupt condition through executing an instruction. Like other conventional approaches, this approach failed to provide an effective mechanism for synchronizing the instruction execution with the environment created to respond to the identification of an arithmetic exception.

A need has therefore been felt for a technique to provide a systematic response to the identification of and response to arithmetic exceptions in a data processing unit that can have a plurality of instructions in simultaneous execution.

### FEATURES OF THE INVENTION

It is an object of the present invention to provide an improved data processing unit.

It is a feature of the present invention to provide a data processing unit for executing a sequence of instructions in a parallel fashion, said data processing unit including an issue unit and at least one execution unit for iteratively processing instructions in said sequence that are transferred thereto, the processing unit characterised in that:
the issue unit comprises
1. an instruction transfer portion for iteratively acquiring instructions in said sequence and selectively transferring them to said execution unit for processing, said sequence including at least one predetermined instruction adapted to cause said execution of said sequence to be temporarily suspended, and
2. an inhibiting portion responsive to the acquisition by said instruction transfer portion of said predetermined instruction for inhibiting said instruction transfer portion from transferring said instructions to said execution unit to temporarily suspend said execution at least until said execution unit completes said processing of instructions previously transferred thereto, and for determining whether to permit said instruction transfer portion to resume transferring said instructions based on results of said processing of said previously transferred instructions.

A system and a method according to the invention are set out in claims 1 and 4, respectively.

### SUMMARY OF THE INVENTION

The aforementioned and other features are accomplished, according to the present invention, by providing an instruction, hereinafter referred to as the DRAIN instruction, and apparatus supporting that instruction, that permits all instructions for which execution has been initiated, but has not been completed when the Drain instruction is initiated, to be completed before further instructions can be executed in the data processing system. The invention also provides for an arithmetic exception summary mask for scalar and vector registers that designates which registers received exceptional results. The DRAIN instruction is used to respond to the detection of an arithmetic exception within the data processing context environment in which the exception has been identified. The same arithmetic exception within a different data processing context environment can have different implications.

These and other features of the present invention will be understood upon reading of the following description along with the drawings.

### BRIEF DESCRIPTION OF THE DRAWINGS

Figure 1A and Figure 1B are block diagrams of exemplary data processing system configurations capable of utilizing the present invention.

Figure 2 is an exemplary block diagram of a central processing unit capable of effective utilization of the instant invention.

Figure 3 is a general timing diagram illustrating the complexity of recovering from detection of an arithmetic exception in a multi-execution unit environment.

Figure 4 is a block diagram illustrating the apparatus required to implement the present invention.

Figure 5 illustrates the operation of the DRAIN instruction according to the present invention.

Figures 6A, 6B and 6C define the arithmetic exception frame generated as a result of the identification of an arithmetic exception according to the present invention.

### DETAILED DESCRIPTION OF THE PREFERRED EMBODIMENT

### 1. Detailed Description of the Figures

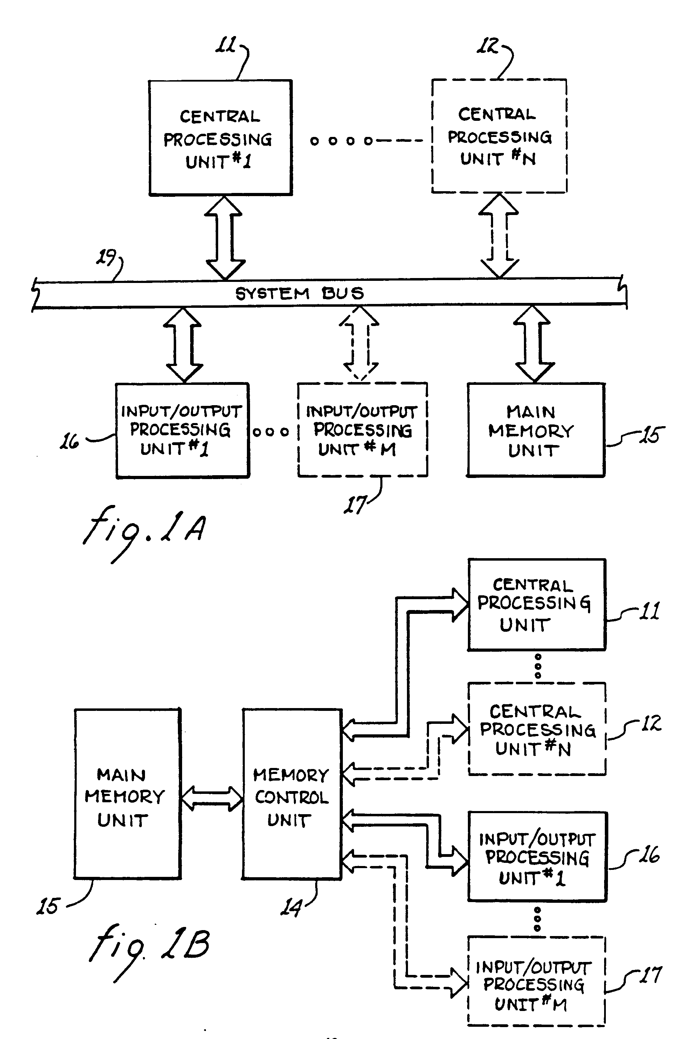

Referring now to Fig. 1A and Fig. 1B, two exemplary- data processing system configurations capable of using the present invention is shown. In Fig. 1A, the central processing unit (#1) 11 is coupled to a system bus 19. Other central processing units (e.g., #N) 12 can also be coupled to the system bus 19. The central processing unit(s) 11 (through 12) process groups of logic signals according to the structure of the central processing unit(s) in conjunction with central processing unit control programs, the control programs being comprised of groups of logic signals entered in the central processing unit or resident in the central processing unit (i.e., in firmware apparatus). The groups of non-resident logic signals are typically stored in the main memory unit 15 and transferred to and from the central processing unit(s) via the system bus 19. Input/output unit(s) {#1} 16 (through {#n} 17) couple devices such as mass memory storage units, user terminal devices and communication devices to the data processing system by means of the system bus 19. The mass storage units store the logic signal groups required by the data processing unit(s). Sets of logic signal groups, typically designated as pages of data, required for the operation of the central processing units 16 through 17 are transferred from the mass storage units, having relatively slow accessibility, to the main memory unit to which access by the central processing unit is relatively fast. The bus oriented system has an advantage in the relative ease to reconfigure the system but has the disadvantage that the each system component requires control apparatus to provide an interface with the system bus 19. Referring next to Fig. 1B, a data processing system is shown in which the central processing unit(s) 11 (through 12) and the input/output unit(s) 16 (through 17) are coupled to the main memory unit 15 through a memory control unit 14, the memory control unit 14 replacing the system bus 19 of the data processing system configuration shown in Fig. 1B and the control function performed by the individual data processing system components in the bus oriented configuration of Fig. 1A. The memory control unit 14 provides a centralized control and monitoring of the transfer of logic signal groups that can be more efficient than the bus oriented configuration of Figure 1A, but with the loss of flexibility.

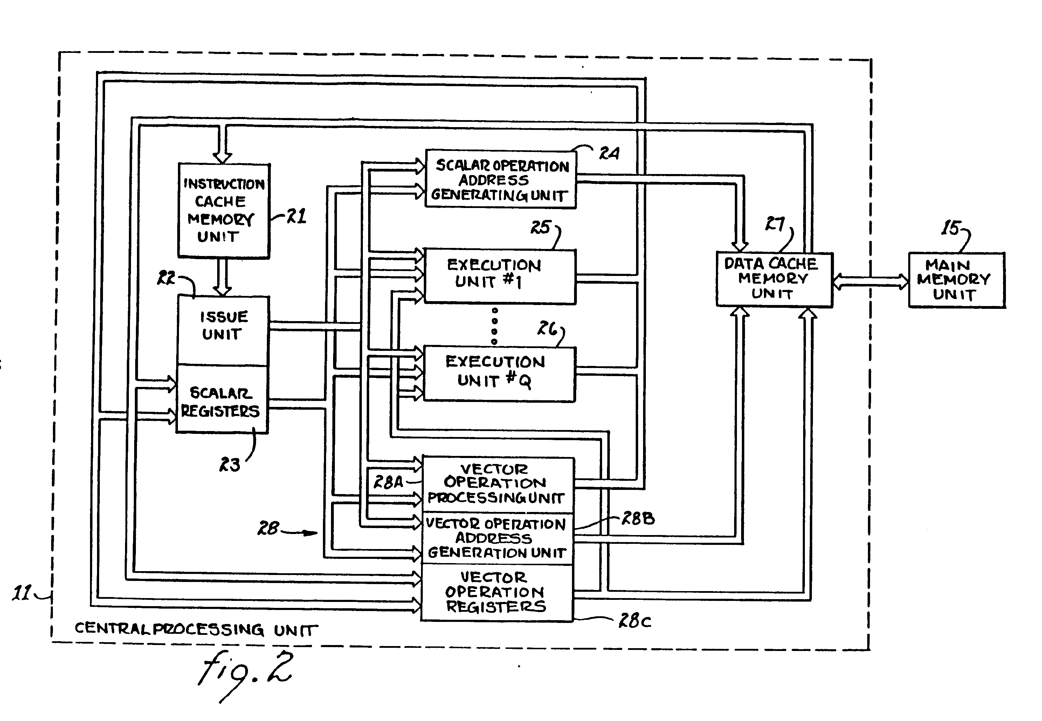

Referring next to Fig. 2, a block diagram of an exemplary central processing unit capable of effective utilization of the present invention is illustrated. The issue unit 22 is responsible for for providing (decoded) instructions to the plurality of specialized execution units comprising scalar operation address generation unit 24, at least one execution unit (#1) 25 (through execution unit {#Q} 26) and a vector operation unit 28, the vector operation unit including vector operation processing unit 28A, vector operation address generation unit 28B and vector operation registers 28C. The logic signal groups processed by the execution units are typically extracted from the scalar registers 23 or the vector registers 28C. The output logic signal groups from the execution units are stored in scalar registers 23, in the vector registers 28C or in the data cache memory unit 27. The data cache memory unit 27 can be viewed as a cache memory unit providing an interface between the main memory unit 15 and the central processing unit 11. (The data cache memory unit 27 is shown as being coupled directly to the main memory unit in Fig. 2. As illustrated in Fig. 1A and Fig. 1B, the actual coupling can include intervening data processing apparatus.) The issue unit 22 includes apparatus for determining which execution unit will process a selected signal group and for determining when the selected execution unit is available for processing a logic signal group. This latter feature includes ascertaining that the destination storage location will be available to store the processed logic signal group. The instruction cache memory unit 21 stores the instructions that are decoded and forwarded to the appropriate execution unit by the issue unit 22. The issue unit 22 has the apparatus to attempt to maximize the processing operations of the execution units. Thus, the issue unit 22 includes pre-fetch apparatus and algorithms to insure that the appropriate instruction (including any branch instruction) is available to the issue unit 22 as needed. The plurality of execution units are, as indicated by the scalar operation address generation unit 24 and the vector operation unit 28, specialized processing devices, each for handling certain classes of processing operation. For example, an execution unit can be configured to handle floating point operations, or integer arithmetic operations, etc. The issue unit 22 has associated therewith scalar registers 23 that can store logic signal groups required for the execution of the program or for providing a record of the data processing operation. For example, one register is the Program Counter register that stores the (virtual) address of the next instruction, in the executing program instruction sequence, to be processed. The scalar operation address generation unit 24 is used to convert virtual addresses to physical locations in the main memory unit 15. The issue unit 22 is also responsible for reordering the logic signal groups from the execution units in the correct sequence when the execution units process instructions at different rates.

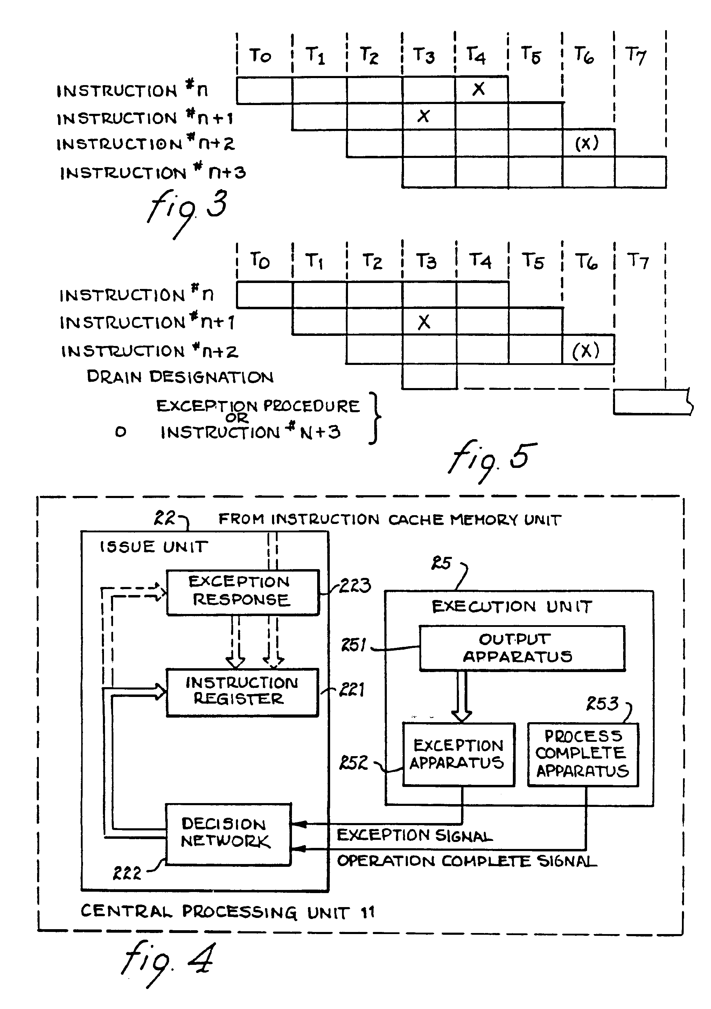

In order to increase the processing speed of the data processing system, the execution units are implemented using pipelined techniques in addition to providing for the parallel execution of multiple instructions. This implementation technique can be understood by reference to Fig. 3 which illustrates features of the pipelining process. The execution unit processing instruction #n in the instruction sequence actually performs the associated operation in five stages, each occupying a time interval of "T". The sum of T₀ through T₄, i.e., 5X"T" can occupy a time interval to perform the associated operation that can exceed the time interval needed to perform the operation in the same technology, but without the multiplicity of stages. The advantage arising from the pipelined implementation is that an instruction can be completed by the execution unit every "T" time interval. When the "T" time interval is appreciably shorter than the time interval for non-pipelined operation, then an instruction sequence can be executed more rapidly.

Referring again to Fig. 3, when instruction # n is applied to an execution unit performing an arithmetic operation and begins the activity identified by the instruction during time interval T₀, after a sequence of suboperations, each occupying a time interval "T", the results of the instruction are available during time interval T₄ for the illustrated 5-stage pipelined processor unit. However, during the normal course of operation, the issue unit will apply new instruction # n+1 during time interval. T₁, instruction #n+2 during time interval T₂ and instruction #n+3 during time interval T₃, instructions #n+1, #n+2, and #n+3 all being applied to an execution unit, but not necessarily the same execution unit, before the execution unit result for instruction #n and possible arithmetic exception associated therewith is available during time interval T₄. To further complicate the processing environment, the different execution units can have different times to complete the execution an instruction (e.g., the number of pipelined stages can be different. Thus, for example, the execution unit result and possible arithmetic exception for instruction #n+2 can be available before the execution unit result and possible arithmetic exception detected for instruction #n.

Referring next to Fig. 4, the apparatus required to implement the present invention is illustrated. In the issue unit 22, an instruction register 221 is provided in which the current instruction is decoded and applied to the appropriate execution unit. When the DRAIN instruction of the present invention is entered in the instruction register 221, decision network 222 responds to the instruction by preventing the next sequential instruction from being entered into the instruction register 221, not permitting decoding of the next instruction or some other appropriate activity that prevents the issuance of the next instruction until all instructions currently in execution have been completed without identification of an arithmetic exception. In the meantime, each execution unit 25 applies to the (decision network 222) of the issue unit 22 a signal from signal apparatus 253 indicating when any instruction executing in the execution unit is complete. Because the issue unit 22 maintains files of uncompleted execution activity, the issue unit 22 can determine when all activity is complete. In addition, in the execution unit 25, exception apparatus 252 is coupled to the output apparatus 251 of the execution unit 25.

Referring next to Fig. 5, instead of instruction #n+3 being applied from the issue unit 22 in time interval T₃ as shown in Fig. 3, the DRAIN instruction is applied at this point. Then, in time interval T₇, the next instruction is either the procedure for responding to the detected arithmetic exception(s) when an exception is detected or the next sequential instruction when no arithmetic exception is detected.

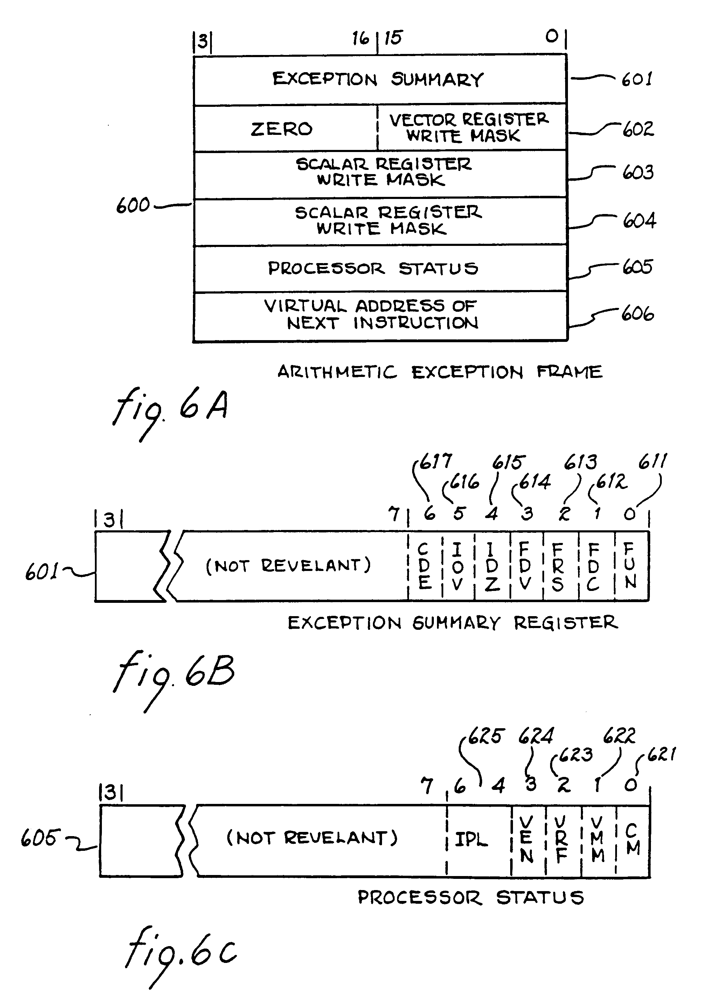

Referring next to Fig. 6A, Fig. 6B and Fig. 6C, the arithmetic exception frame generated when an arithmetic exception is identified according to the preferred embodiment is illustrated. In the arithmetic exception frame 600 of Fig. 6A, the first longword (i.e., 4 bytes of logic signals) 601 of the exception frame stores the exception summary information (i.e., from the exception summary register. The contents of this parameter or longword are described below. The second longword 602 stores the vector register write mask, while the longwords 603 and 604 store the scalar register write mask The register write masks of longwords 602, 603 and 604 identify the register into which were written the results identified as an arithmetic exception. A one-to-one correspondence exists between the position of bits in the mask and registers that can receive the exceptional results. For example, in the preferred embodiment, 64 scalar registers are present and each bit field of longword 604 and 605 is associated with a scalar register, i.e. 0 through 63. The parameter in longword 605 is the processor status (i.e., the contents of the processor status register), which is described below. In longword 606, the virtual address of the next instruction is stored. This address in parameter 606 is the address of the instruction following the drain instruction.

Referring next to Fig. 6B, the definition of the exception summary parameter 601 is shown. The bit 0 position 611, designated FUN in Fig 6B indicates that a floating point arithmetic or conversion operation underflowed the destination exponent. The bit 1 position 612, FDZ, indicates that a division by zero in a floating point operation was attempted. The bit 2 position 613, FRS, indicates that an attempt was made to perform a floating point arithmetic, conversion, or comparison operation and at least one of the operands was reserved. The bit 3 position 614, FOV, indicates that an attempt to perform an floating point arithmetic or conversion operation resulted in an overflow of the destination exponent. The bit 4 position 615, IDZ, indicates that an attempt was made to perform an integer divide operation with a divisor of zero. The bit 5 position 616, IOV, indicates that an integer arithmetic operation or conversion from floating point format to integer format oyerflowed the precision available at the destination location. The bit 6 position. 617, COE, indicates that a co-processor read or write with a trap enable set was executed when a co-processor exception was identified.

In Fig. 6C, the processor status parameters 605 are identified. For these parameters, bit 0 position. 621, CM, indicates the access mode of the currently executing program wherein a "0" logic signal indicates a privileged mode of operation and a "1" logic signal indicates a non-privileged or user mode of operation. The bit 1 position 622, VMM, indicates a processor execution mode that is not directly related to the present invention. The bit 2 position 623, VRF, is set in the processor status parameter when a vector restart frame has been saved during initiation of an exception. The bit 3 position 624, VEN, controls whether vector instructions can be executed. When this position has a signal set therein, vector instructions can issue normally. Otherwise, an attempt to issue a vector instruction will result in a vector operation enable fault. The bit 4-6 positions 624, IPL, define the interrupt priority level for the current processor execution activity.

### 2. Operation of the Preferred Embodiment

The central processing unit having pipelined execution units of Fig. 2 was implemented in the preferred embodiment subject to several constraints, however, other design implementations can utilize the present invention. The central processing unit includes a plurality of execution units, each execution unit adapted to execute a class of instructions. By way of example, one execution unit, the scalar address generating unit 24, controls the transfer of the logic signal groups between the central processing unit and the main memory unit 15, i.e., executes the load/store instructions. One execution unit can be adapted to execute data signal group shifting operations, one execution unit for floating point add/subtract operations, one execution unit for integer and floating point multiply operations and one execution units for integer and floating point divide operations. The specialized execution units can be, but are not necessarily implemented in a pipelined configuration. The other features of the central processing unit are the following. The instruction in the currently executing sequence of instructions is transferred to the issue unit 22 from the instruction cache memory unit 21. In the issue unit 22, the instruction is broken down into its constituent parts and data-dependent control signals and address signals are generated therefrom. However, before an instruction can begin execution (i.e., be issued), several constraints must be satisfied. All source and destination registers for the instruction must be available, i.e., no write operations to a needed register can be outstanding. The register write path must be available at the future cycle in which this instruction will store the processed quantity. Only one result can be stored into the registers per cycle. All instructions (with the exception of load operations which are predicted on the basis of cache memory unit hits) have a fixed, data independent execution time. The execution unit to be required for processing the instruction during the execution must be available to perform the operation. All units (with the exception of the divide execution unit) can be pipelined and can accept a new scalar instruction each machine cycle. The divide execution unit is iterative and can execute a new divide operation only when the previous divide operation is completed. With respect to the vector operation unit, a vector operation reserves an execution unit for the duration. of the vector operation. When a memory load/store instruction experiences a cache memory- unit miss, the load/store unit busy flag will cause the subsequent load/store instructions to be delayed until the cache memory miss response is complete. When an instruction does issue, the destination register and the write path cycle for the result are reserved. During operand set-up, all instruction-independent register addresses are generated, operands are read and stored, and data-dependent control signals -are generated. The instruction operands and control signals are passed to the the associated execution unit for execution. The result generated by the execution unit is stored in the register files or in the data cache memory unit 15 as appropriate. Once an instruction issues, the result of the processing may not be available for several machine cycles Meanwhile, in the next machine cycle, the next instruction can be decoded and can be issued when the requisite issue conditions are satisfied. Thus, the instructions are decoded and issued in the normal instruction sequence, but the results can be stored in a different order because of the varying instruction execution times of the execution units. This out of order storing of the results of the processing operations can complicate the exception handling and the retry of failing instructions. However, these events are relatively rare and the out of order storing provides execution and hardware advantages.

The execution of a DRAIN instruction provides that all the instructions, currently in execution in a data processing system will be completed before a next instruction is executed. Therefore, a principal use Drain instruction is between changes in the context environment. When all active instructions have been completed, either the next instruction will be issued or an arithmetic exception procedure will begin execution. This selection ensures that all arithmetic exceptions generated from previously issued, but uncompleted instructions, are processed in a consistent software environment or processing context.

The presence of an arithmetic exception does not necessarily mean that the data signal group causing the arithmetic exception is defective. The data processing context environment determines whether the data signal group causing the arithmetic exception is defective. This relationship indicates why the processing of an arithmetic exception in the appropriate data processing context environment is important. For example, a program or routine can be in execution for which arithmetic overflows and underflows are an expected result. The presence of an arithmetic exception in this context environment can cause the subroutine or program to scale the data signal groups in an attempt to avoid the exceptional condition. However, if the data processing context environment had been altered between the identification of an arithmetic exception and the resulting response, the response to the arithmetic exception can be inappropriate,

In order to facilitate response to the identification of an arithmetic exception, once the instructions in execution are completed, an exception summary mask is developed that identifies the (scalar and vector) registers that have received results that are identified as exceptional, (i.e., results that are not correct because of an arithmetic exception condition). This summary mask is made available to the privileged operating system software along with the continuation program counter. The summary mask and the contents of the continuation program counter permit operating system exception handling software to identify the instructions resulting in the arithmetic exception conditions.

It will be clear to those skilled in the art of data processing system design that the DRAIN instruction (and the apparatus implementing execution of the drain instruction) can be used to verify hardware implementation of data processing system circuit designs and can be use to assist in. the verification of software programs. The DRAIN instruction can be inserted in the executing program instruction sequence immediately following instructions for which a problem is anticipated. In this manner, the results of the instruction sequence to the location of the DRAIN instruction can be verified. High level programming language compilers can use the DRAIN instruction when the program is compiled for debugging. In this application, the Drain instruction is positioned between groups of program instructions that comprise the translation of the high level language statement. When the instruction sequence generates an arithmetic exception, the verification (debugging) procedure can identify the statement in the source program that resulted in an arithmetic exception.

The foregoing description is included to illustrate the operation of the preferred embodiment and is not meant to limit the scope of the invention. The scope of the invention is to be limited only by the following claims. From the foregoing description, many variations will be apparent to those skilled in the art that would yet be encompassed by the spirit and scope of the invention.

## Claims

1. A data processing unit (11) for executing a sequence of instructions in a parallel fashion, said data processing unit including an issue unit (22) and at least one execution unit (25) for iteratively processing instructions in said sequence that are transferred thereto, the processing unit characterised in that:
the issue unit (22) comprises
1. an instruction transfer portion (221) for iteratively acquiring instructions in said sequence and selectively transferring them to said execution unit for processing, said sequence including at least one predetermined instruction adapted to cause said execution of said sequence to be temporarily suspended, and
2. an inhibiting portion (223) responsive to the acquisition by said instruction. transfer portion of said predetermined instruction for inhibiting said instruction transfer portion from transferring said instructions to said execution unit to temporarily suspend said execution at least until said execution unit completes said processing of instructions previously transferred thereto, and for determining whether to permit said instruction transfer portion to resume transferring said instructions based on results of said processing of said previously transferred instructions.

2. A data processing unit as defined in claim 1, wherein one of said results is an operation complete indication that said execution unit is adapted to generate in response to termination of processing of each instruction, said issue unit further including a disabling portion (222) responsive to the receipt of said operation complete indication for disabling said inhibiting portion to thereafter permit said instruction transfer portion (221) to resume transferring instructions to said execution unit.

3. A data processing unit as defined in claim 2, wherein said instructions may comprise two instruction streams, including a program instruction stream and an exception handling instruction stream, said instruction transfer portion including an exception response portion for normally acquiring instructions from said program instruction stream, and responsive to the receipt of an exception indication from any execution unit for thereafter acquiring instructions from said exception handling instruction stream for transferring to said execution unit.

4. A data processing unit as defined in claim 3, wherein said exception. response portion further includes a context storage portion for storing context information prior to acquiring instructions from said exception handling instruction stream for transferring to said execution unit.

5. The data processing unit as defined in claim 1, wherein one of said results is an exception indication that said execution unit is adapted to generate in response to the occurrence of an exception condition during said processing of said instructions, said inhibiting portion determining to allow said instruction transfer portion to resume said transferring of said instructions if said execution unit completes said processing of said previously transferred instructions without generating said exception indication.

6. The data processing unit as defined in claim 5, wherein said inhibiting portion is adapted to respond to said exception indication from said execution unit by continuing to inhibit said instruction transfer portion from transferring said instructions after said execution unit completes said processing of said previously transferred instructions.

7. The data processing unit as defined in claim 1, further comprising a plurality of execution units each iteratively processing said instructions in said sequence that are transferred thereto by said instruction transfer portion, said inhibiting portion being adapted to be further responsive to said predetermined instruction to:
inhibit said instruction transfer portion from transferring said instructions to said plurality of execution units at least until all of said plurality of execution units complete said processing of instructions previously transferred thereto; and
determine whether to permit said instruction transfer portion to resume transferring said instructions to said plurality of execution units based on results of said processing of said previously transferred instructions.

8. A data processing unit as defined in claim 7, wherein one of said results is an exception indication that said execution units are adapted to generate in response to the occurrence of an exception condition during said processing of said instructions, said inhibiting portion determining to allow said instruction transfer portion (221) to resume said transferring of said instructions to all of said execution units (25,26) if said execution units complete said processing of said previously transferred instructions without generating said exception indication.

9. The data processing unit as defined in claim 8, wherein said inhibiting portion is adapted to respond to said exception indications from said execution units by continuing to inhibit said plurality of instruction transfer portion from transferring said instructions after said plurality of execution units complete said processing of said previously transferred instructions.

10. A data processing unit as defined in claim 8, wherein one of said results is an operation complete indication that said execution units are adapted to generate in response to termination of processing of each instruction, and said issue unit (22) further including a disabling portion (222) which receives operation complete indications from all of said execution units (25,26), said disabling portion (222) disabling said inhibiting portion in response to the receipt of said operation complete indication from all of the execution units (25,26) currently processing instructions to thereafter permit said instruction transfer portion (221) to resume transferring instructions to said execution unit.

11. A data processing unit as defined in claim 10, wherein said issue unit (22) maintains unfinished instruction information identifying instructions that have been transferred to an execution unit but for which processing has not been completed, said disabling portion (222) using said unfinished instruction information in determining whether it has received an operation complete indication from all of the execution units currently processing instructions.

12. A data processing unit as defined in claim 11, wherein said instructions may comprise two instruction streams, including a program instruction stream and an exception handling instruction stream, said issue unit (22) including an exception response portion for normally acquiring instructions from said program instruction stream, and responsive to the receipt of an exception indication from any execution unit for thereafter acquiring instructions from said exception handling instruction stream for transfer to an execution unit.

13. A data processing unit as defined in claim 12, wherein said exception response portion further includes a context storage portion (600) for storing context information prior to acquiring instructions from said exception handling instruction stream for transferring to an execution unit.

14. A data processing unit as defined in claim 1, including a plurality of execution units (25,26) each for iteratively processing instructions in said sequence and for generating in response thereto an exception indication in response to the occurrence of an exception condition,
wherein said issue unit (22) further comprises
3. an instruction acquisition portion (221) for iteratively acquiring instructions in said sequence from one of a plurality of instruction streams, including a program instruction stream and an exception handling instruction stream, said instruction acquisition portion including an exception response portion for normally acquiring instructions from said program instruction stream, and responsive to the receipt of an exception indication from any execution unit for thereafter acquiring instructions from said exception handling instruction stream;
wherein said instruction transfer portion (221) is able to
selectively transfer the instructions acquired by said instruction acquisition portion to said execution units for processing;
wherein said inhibiting portion (223),
responsive to the acquisition by said instruction transfer portion of said predetermined instruction, is able to inhibit said instruction transfer portion from transferring said instructions to said plurality of execution units to temporarily suspend said execution at least until said execution units complete said processing of instructions previously transferred thereto; and
wherein said issue unit (22) further comprises
4. a disabling portion (222), responsive to said execution units completing said processing of said previously transferred instructions without generating a said exception indication, for disabling said inhibiting portion to thereafter permit said instruction transfer portion to resume transferring instructions to said plurality of execution units.

15. A method of operating a data processing unit (11) in which multiple instructions can be in simultaneous execution comprising at least one execution unit (25) for iteratively processing instructions in a sequence of instructions that are transferred thereto, and an issue unit (22) including an instruction transfer portion (221) and inhibiting portion (223), the method characterised by the issue unit:
A. iteratively acquiring instructions in said sequence, said sequence including at least one predetermined instruction adapted to cause said processing of said sequence to be temporarily suspended;
B. determining for each acquired instruction whether the instruction is said predetermined instruction, and, if the acquired instruction is not said predetermined instruction, transferring the instruction to said execution unit (25) for processing;
C. responding to said predetermined instruction by inhibiting transfers of other instructions in said sequence to said execution unit to temporarily suspend said processing at least until said execution unit completes processing of instructions previously transferred thereto; and
D. determining whether to resume said transfers of said instructions based on results of said processing of said previously transferred instructions.

16. A method as defined in claim 15, wherein one of said results is an operation complete indication that said execution unit is adapted to generate in response to termination of processing of each instruction, said issue unit further resuming transfer of instructions to said execution unit upon receipt of said operation complete indication.

17. A method as defined in claim 16, wherein said instructions may comprise two instruction streams, including a program instruction stream and an exception handling instruction stream, said issue unit normally acquiring instructions from said program instruction stream, and responsive to the receipt of an exception indication from any execution unit for thereafter acquiring instructions from said exception handling instruction stream for transferring to said execution unit.

18. A method as defined in claim 17, wherein said exception response portion further includes a context storage portion for storing context information prior to acquiring instructions from said exception handling instruction stream for transferring to said execution unit.

19. the method as defined in claim 15, wherein one of said results is an exception indication that said execution unit is adapted to generate in response to the occurrence of an exception condition during said processing of said instructions, said issue unit determining to resume said transferring of said instructions if said execution unit completes said processing of said previously transferred instructions without generating said exception indication.

20. The method as defined in claim 19, wherein said issue unit responds to said exception indication from said execution unit by continuing to inhibit said transfers of said instructions after said execution unit completes said processing of said previously transferred instructions.

21. The method as defined in claim 15, wherein said data processing unit further comprises a plurality of execution units each iteratively processing said instructions in said sequence that are transferred thereto by said issue unit, said issue unit being further responsive to said predetermined instruction in:
inhibiting transfers of said instructions to said execution units at least until all of said execution units complete said processing of instructions previously transferred thereto, and
determining whether to resume said transfers of said instructions to said execution units based on results of said processing of said previously transferred instructions.

22. A method as defined in claim 21, wherein one of said results is an exception indication that each of said execution units is adapted to generate in response to the occurrence of an exception condition during said processing of said instructions, said issue unit determining to resume said transfers of said processing of said instructions to all of said execution units if said execution units complete said processing of said previously transferred instructions without generating said exception indication.

23. The method of claim 22, wherein said issue unit responds to said exception indications from said execution units by continuing to inhibit said transfers of said instructions after said execution units complete said processing of said previously transferred instructions.

24. A method as defined in claim 22, wherein one of said results is an operation complete indication that each of said execution unit is adapted to generate in response to termination of processing of each instruction, said issue unit further resuming transfer of instructions to said execution units upon receipt of said operation complete indication from all of said execution units currently processing instructions.

25. A method as defined in claim 24, wherein said issue unit maintains unfinished instruction information identifying instructions that have been transferred to an execution unit but for which processing has not been completed, said issue unit using said unfinished instruction information in determining whether it has received an operation complete indication from all of the execution units currently processing instructions.

26. A method as defined in claim 25, wherein said instructions may comprise two instruction streams, including a program instruction stream and an exception handling instruction stream, said issue unit normally acquiring instructions from said program instruction stream, and responsive to the receipt of an exception indication from any execution unit for thereafter acquiring instructions from said exception handling instruction stream for transferring to an execution unit.

27. A method as defined in claim 26, wherein said issue unit further includes a context storage portion that storing context information prior to acquiring instructions from said exception handling instruction stream for transferring to an execution unit.

## Patentansprüche

1. Datenverarbeitungseinheit (11) zum Ausführen einer Sequenz von Instruktionen in paralleler Art, wobei die Datenverarbeitungseinheit eine Ausgabeeinheit (22) und zumindest eine Ausführungseinheit (25) zum iterativen Verarbeiten von Instruktionen in der Sequenz hat, die ihr zugeführt werden, wobei die Verarbeitungseinheit dadurch gekennzeichnet ist, daß:
die Ausgabeeinheit (22) aufweist
1. einen Instruktionstransferteil (221) zum iterativen Holen von Instruktionen in der Sequenz und zum selektiven Transferieren der Instruktionen zur Ausführungseinheit zum Verarbeiten, wobei die Sequenz zumindest eine vorgegebene Instruktion enthält, die dafür ausgelegt ist, zu verursachen, daß die Ausführung der Sequenz zeitweilig ausgesetzt wird, und
2. einen Sperrteil (223), der auf das Holen der vorgegebenen Instruktion durch den Instruktionstransferteil reagiert, zum Sperren des Instruktionstransferteils dafür, die Instruktionen zu der Ausführungseinheit zu transferieren, um die Ausführung zeitweilig auszusetzen, zumindest bis die Ausführungseinheit die Verarbeitung der Instruktionen, die ihr zuvor zugeführt wurden, abgeschlossen hat, und zum Bestimmen, ob dem Instruktionstransferteil erlaubt werden kann, in Abhängigkeit von den Ergebnissen der Verarbeitung von den zuvor transferierten Instruktionen das Transferieren der Instruktionen wieder aufzunehmen.

2. Datenverarbeitungseinheit, wie in Anspruch 1 definiert, worin eines der Ergebnisse in einer Operation-Beendet-Anzeige besteht, wobei die Ausführungseinheit dazu ausgelegt ist, diese Anzeige auf die Beendigung der Verarbeitung irgendeiner Instruktion hin zu erzeugen, wobei die Ausgabeeinheit weiterhin einen Sperrungsteil (222) enthält, der auf den Empfang der Operation-Beendet-Anzeige reagiert, zum Sperren des Sperrteils dazu, danach dem Instruktionstransferteil (221) zu erlauben, das Transferieren von Instruktionen zu der Ausführungseinheit wieder aufzunehmen.

3. Datenverarbeitungseinheit, wie in Anspruch 2 definiert, worin die Instruktionen zwei Instruktionsströme aufweisen können, die einen Programminstruktionsstrom und einen Ausnahme-Behandlungs-Instruktionsstrom enthalten, wobei der Instruktionstransferteil einen Ausnahme-Antwortabschnitt für normales Holen von Instruktionen aus dem Programminstruktionsstrom enthält und auf den Empfang einer Ausnahme-Anzeige von irgendeiner Ausführungseinheit antwortet, um danach Instruktionen aus dem Ausnahme-Behandlungs-Instruktionsstrom zum Transferieren zu der Ausführungseinheit zu holen.

4. Datenverarbeitungseinheit, wie in Anspruch 3 definiert, worin der Ausnahme-Antwort-Teil weiterhin einen Kontextspeicherabschnitt zum Speichern von Kontextinformationen vor dem Holen von Instruktionen aus dem Ausnahme-Behandlungs-Instruktionsstrom zum Transferieren zu der Ausführungseinheit enthält.

5. Datenverarbeitungseinheit, wie in Anspruch 1 definiert, worin eines der Ergebnisse eine Ausnahmeanzeige ist, die von der dafür ausgelegten Ausführungseinheit in Antwort auf das Auftreten einer Ausnahmebedingung während der Verarbeitung der Instruktionen erzeugt wird, wobei der Sperrteil bestimmt, es dem Instruktionstransferteil zu erlauben, das Transferieren der Instruktionen wieder aufzunehmen, wenn die Ausführungseinheit das Verarbeiten der vorhergehend transferierten Instruktionen abgeschlossen hat, ohne daß die Ausnahmeanzeige erzeugt wurde.

6. Datenverarbeitungseinheit, wie in Anspruch 5 definiert, worin der Sperrteil dafür ausgelegt ist, auf die Ausnahmeanzeige von der Ausführungseinheit zu antworten, indem er damit fortfährt, den Instruktionstransferteil dafür zu sperren, die Instruktionen danach zu transferieren, nachdem die Ausführungseinheit die Verarbeitung der vorhergehend transferierten Instruktionen beendet hat.

7. Datenverarbeitungseinheit, wie in Anspruch 1 definiert, weiterhin aufweisend eine Vielzahl von Ausführungseinheiten, von denen jede iterativ die Instruktionen in der Sequenz verarbeitet, die zu ihr von dem Instruktionstransferteil transferiert werden, wobei der Sperrteil dazu ausgelegt ist, weiterhin auf die vorgegebene Instruktion damit zu antworten:
den Instruktionstransferteil dafür zu sperren, Instruktionen zu der Vielzahl von Ausführungseinheiten zu transferieren, zumindest bis alle der Vielzahl von Ausführungseinheiten die Verarbeitung von Instruktionen, die zuvor zu ihnen transferiert wurden, abgeschlossen haben; und zu bestimmen, ob dem Instruktionstransferteil erlaubt werden kann, das Transferieren der Instruktionen zu der Vielzahl von Ausführungseinheiten in Abhängigkeit von den Ergebnissen der Verarbeitung von zuvor transferierten Instruktionen wieder aufzunehmen.

8. Datenverarbeitungseinheit, wie in Anspruch 7 definiert, worin eines der Ergebnisse eine Ausnahmeanzeige ist, die von den dafür ausgelegten Ausführungseinheiten in Antwort auf das Auftreten einer Ausnahmebedingung während der Verarbeitung der Instruktionen erzeugt wird, wobei es der Sperrteil bestimmt, dem Instruktionstransferteil (221) zu erlauben, das Transferieren der Instruktionen zu allen Ausführungseinheiten (25, 26) wieder aufzunehmen, wenn die Ausführungseinheiten die Verarbeitung der zuvor transferierten Instruktionen beendet haben, ohne daß die Ausnahmeanzeige erzeugt wurde.

9. Datenverarbeitungseinheit, wie in Anspruch 8 definiert, worin der Sperrteil dafür ausgelegt ist, auf die Ausnahmeanzeigen von den Ausführungseinheiten zu antworten, indem er damit fortfährt, die Vielzahl von Instruktionstransferteilen dafür zu sperren, Instruktionen zu transferieren, nachdem die Vielzahl von Ausführungseinheiten die Verarbeitung der zuvor transferierten Instruktionen beendet hat.

10. Datenverarbeitungseinheit, wie in Anspruch 8 definiert, worin eines der Ergebnisse in einer Operation-Beendet-Anzeige besteht, die von den dafür ausgelegten Ausführungseinheiten in Antwort auf die Beendigung der Verarbeitung jeder Instruktion erzeugt wird, und wobei die Ausgabeeinheit (22) weiterhin einen Sperrungsteil (222) enthält, der die Operation-Beendet-Anzeigen von allen Ausführungseinheiten (25, 26) empfängt, wobei der Sperrungsteil (222) den Sperrteil in Antwort auf den Empfang der Operation-Beendet-Anzeige von allen Ausführungseinheiten (25, 26), die momentan Instruktionen verarbeiten, sperrt, um dem Instruktionstransferteil (221) zu erlauben, das Transferieren von Instruktionen zu der Ausführungseinheit wieder aufzunehmen.

11. Datenverarbeitungseinheit, wie in Anspruch 10 definiert, worin die Ausgabeeinheit (22) Informationen nicht beendeter Instruktionen aufrechterhält, die Instruktionen kennzeichnen, die zu einer Ausführungseinheit transferiert wurden, aber für die die Verarbeitung nicht abgeschlossen wurde, wobei der Sperrungsteil (222) die Informationen über die nicht beendeten Instruktionen beim Bestimmen verwendet, ob sie eine Operation-Beendet-Anzeige von allen Ausführungseinheiten empfangen hat, die momentan Instruktionen verarbeiten.

12. Datenverarbeitungseinheit, wie in Anspruch 11 definiert, worin die Instruktionen zwei Instruktionsströme aufweisen können, die einen Programminstruktionsstrom und einen Ausnahme-Behandlungs-Instruktionsstrom enthalten, wobei die Ausgabeeinheit (22) einen Ausnahmeantwortteil zum normalen Holen von Instruktionen aus dem Programminstruktionsstrom und, in Antwort auf den Empfang einer Ausnahme-Anzeige von irgendeiner Ausführungseinheit, danach zum Holen von Instruktionen aus dem Ausnahme-Behandlungs-Instruktionsstrom zum Transferieren zu der Ausführungseinheit hat.

13. Datenverarbeitungseinheit, wie in Anspruch 12 definiert, worin der Ausnahme-Antwort-Teil weiterhin einen Kontextspeicherteil (26) zum Speichern von Kontextinformationen vor dem Holen von Instruktionen aus dem Ausnahme-Behandlungs-Instruktionsstrom zum Transferieren zu einer Ausführungseinheit enthält.

14. Datenverarbeitungseinheit, wie in Anspruch 1 definiert, die eine Vielzahl von Ausführungseinheiten (25, 26) enthält, von denen jede iterativ Instruktionen in der Sequenz verarbeitet und von denen jede daraufhin eine Ausnahme-Anzeige in Antwort auf das Auftreten einer Ausnahme-Bedingung erzeugt, worin die Ausgabeeinheit (22) weiterhin aufweist
3. einen Instruktionsholteil (221) zum iterativen Holen von Instruktionen in der Sequenz aus einem der Vielzahl von Instruktionsströmen, die einen Programminstruktionsstrom und einen Ausnahme-Behandlungs- Instruktionsstrom enthalten, wobei der Instruktionsholteil einen Ausnahme-Antwortteil zum normalen Holen von Instruktionen aus dem Programminstruktionsstrom und, auf den Empfang einer Ausnahme-Anzeige von irgendeiner Ausführungseinheit hin, danach zum Holen von Instruktionen aus dem Ausnahme-Behandlungs-Instruktionsstrom enthält; worin der Instruktionstransferteil (221) in der Lage dazu ist, selektiv die Instruktionen, die von dem Instruktionsholteil geholt wurden, zu den Ausführungseinheiten zum Verarbeiten zu transferieren; worin der Sperrteil (223), der auf das Holen durch den Instruktionstransferteil der vorgegebenen Instruktion reagiert, dazu in der Lage ist, den Instruktionstransferteil dafür zu sperren, Instruktionen zu der Vielzahl von Ausführungseinheiten zu transferieren, um zeitweilig die Ausführung auszusetzen, zumindest bis die Ausführungseinheiten die Verarbeitung der Instruktionen beendet haben, die zuvor zu ihnen transferiert wurden; und worin die Ausgabeeinheit (22) weiterhin aufweist
4. einen Sperrungsteil (222), der auf die Ausführungseinheiten reagiert, die die Verarbeitung der zuvor transferierten Instruktionen beendet haben, ohne daß die Ausnahme-Anzeige erzeugt wurde, zum Sperren des Sperrteils, um danach dem Instruktionstransferteil zu erlauben, das Transferieren von Instruktionen zu der Vielzahl von Ausführungseinheiten wieder aufzunehmen.

15. Verfahren zum Betreiben einer Datenverarbeitungseinheit (11), in der vielzählige Instruktionen in simultaner Ausführung sein können, die zumindest eine Ausführungseinheit (25) zum iterativen Verarbeiten von Instruktionen in einer Sequenz der Instruktionen, die zu ihr transferiert werden, und eine Ausgabeeinheit (22) aufweist, die einen Instruktionstransferteil (221) und einen Sperrteil (223) enthält, wobei das Verfahren durch die Ausgabeeinheit gekennzeichnet ist:
A. iteratives Holen von Instruktionen in der Sequenz, wobei die Sequenz zumindest eine vorgegebene Instruktion aufweist, die dafür ausgelegt ist, zu verursachen, daß die Verarbeitung der Sequenz zeitweilig ausgesetzt wird;
B. Bestimmen für jede geholte Instruktion, ob die Instruktion der vorgegebenen Instruktion entspricht, und, wenn die geholte Instruktion nicht der vorgegebenen Instruktion entspricht, Transferieren der Instruktion zu der Ausführungseinheit (25) zur Verarbeitung;
C. Antworten auf die vorgegebene Instruktion mit Sperren des Transfers anderer Instruktionen in der Sequenz zu der Ausführungseinheit, um zeitweilig die Verarbeitung auszusetzen, zumindest bis die Ausführungseinheit die Verarbeitung der Instruktionen beendet hat, die zuvor zu ihr transferiert wurden; und
D. Bestimmen, ob die Transfers der Instruktionen in Abhängigkeit von den Ergebnissen der Verarbeitung der zuvor übertragenen Instruktionen wieder aufgenommen wird.

16. Verfahren, wie in Anspruch 15 definiert, worin eines der Ergebnisse in einer Operation-Beendet-Anzeige besteht, die von der dafür ausgelegten Ausführungseinheit in Antwort auf das Beenden der Verarbeitung jeder Instruktion erzeugt wird, wobei die Ausgabeeinheit weiterhin den Instruktionstransfer zu der Ausführungseinheit auf den Empfang einer Operation-Beendet-Anzeige hin wieder aufnimmt.

17. Verfahren, wie in Anspruch 16 definiert, worin die Instruktionen zwei Instruktionsströme aufweisen, die einen Programminstruktionsstrom und einen Ausnahme-Behandlungs-Instruktionsstrom enthalten, wobei die Ausgabeeinheit normalerweise Instruktionen aus dem Programminstruktionsstrom holt und auf den Empfang einer Ausnahme-Anzeige von irgendeiner Ausführungseinheit hin damit reagiert, danach Instruktionen aus dem Ausnahme-Behandlungs-Instruktionsstrom zum Transferieren zu der Ausführungseinheit zu holen.

18. Verfahren, wie in Anspruch 17 definiert, worin der Ausführungsantwortteil weiterhin einen Kontextspeicherteil zum Speichern von Kontextinformationen vor dem Holen von Instruktionen aus dem Ausnahme-Behandlungs-Instruktionsstrom zum Transferieren zu der Ausführungseinheit enthält.

19. Verfahren, wie in Anspruch 15 definiert, worin eines der Ergebnisse in einer Ausnahme-Anzeige besteht, die von einer dafür ausgelegten Ausführungseinheit in Antwort auf das Auftreten einer Ausnahmebedingung während der Verarbeitung der Instruktionen erzeugt wird, wobei der Ausgabeeinheit bestimmt, das Transferieren der Instruktionen wieder aufzunehmen, wenn die Ausführungseinheit die Verarbeitung der zuvor zugeführten Instruktionen abschließt, ohne daß die Ausnahme-Anzeige erzeugt wird.

20. Verfahren, wie in Anspruch 19 definiert, worin die Ausgabeeinheit auf die Ausnahme-Anzeige von der Ausführungseinheit reagiert, indem sie damit fortfährt, die Übertragungen der Instruktionen zu sperren, nachdem die Ausführungseinheit die Verarbeitung der zuvor transferierten Instruktionen abgeschlossen hat.

21. Verfahren, wie in Anspruch 15 definiert, worin die Datenverarbeitungseinheit weiterhin eine Vielzahl von Ausführungseinheiten aufweist, die iterativ die Instruktionen in der Sequenz verarbeiten, die ihnen von der Ausgabeeinheit zugeführt werden, wobei die Ausgabeeinheit weiterhin auf die vorgegebene Instruktion damit reagiert:
die Übertragungen der Instruktionen zu den Ausführungseinheiten zu sperren, zumindest bis alle Ausführungseinheiten die Verarbeitung der Instruktionen, die ihnen zuvor zugeführt wurden, abgeschlossen haben, und
zu bestimmen, ob die Transfers von Instruktionen zu den Ausführungseinheiten in Abhängigkeit von den Ergebnissen der Verarbeitung der zuvor transferierten Instruktionen wieder aufgenommen werden sollen.

22. Verfahren, wie in Anspruch 21 definiert, worin eines der Ergebnisse einen Ausnahme-Anzeige ist, die von jeder der dafür ausgelegten Ausführungseinheiten in Antwort auf das Auftreten einer Ausnahme-Bedingung hin während der Verarbeitung der Instruktionen erzeugt wird, wobei die Ausgabeeinheit bestimmt, die Transfers der Verarbeitung der Instruktionen zu allen Ausführungseinheiten wieder aufzunehmen, wenn die Ausführungseinheiten die Verarbeitung der zuvor transferierten Instruktionen beendet haben, ohne daß eine Ausnahme-Anzeige erzeugt wurde.

23. Verfahren nach Anspruch 22, worin die Ausgabeeinheit auf die Ausnahme-Anzeigen von den Ausführungseinheiten reagiert, indem sie damit fortfährt, die Transfers der Instruktionen zu sperren, nachdem die Ausführungseinheiten die Verarbeitung der zuvor transferierten Instruktionen beendet haben.

24. Verfahren, wie in Anspruch 22 definiert, worin eines der Ergebnisse eine Operation-Beendet-Anzeige ist, die von den dafür ausgelegten Ausführungseinheiten in Antwort auf die Beendigung der Verarbeitung jeder Instruktion hin erzeugt wird, wobei die Ausgabeeinheit weiterhin den Transfer von Instruktionen zu den Ausführungseinheiten beim Empfang der Operation-Beendet-Anzeige von allen Ausführungseinheiten durchführt, die momentan Instruktionen verarbeiten.

25. Verfahren, wie in Anspruch 24 definiert, worin die Ausgabeeinheit Informationen über nicht beendete Instruktionen, die Instruktionen kennzeichnen, welche zu einer Ausführungseinheit transferiert wurden, aber für die die Verarbeitung noch nicht abgeschlossen wurde, aufrechterhält und wobei die Ausgabeeinheit die Informationen über die nicht beendeten Instruktionen beim Bestimmen verwendet, ob sie ein Operation-Beendet-Anzeige von allen Ausführungseinheiten empfangen hat, die momentan Instruktionen verarbeiten.

26. Verfahren, wie in Anspruch 25 definiert, worin die Instruktionen zwei Instruktionsströme aufweisen können, die einen Programminstruktionsstrom und einen Ausnahme-Behandlungs-Instruktionsstrom aufweisen, wobei die Ausgabeeinheit normalerweise Instruktionen aus dem Programminstruktionsstrom holt und auf den Empfang einer Ausnahmeanzeige von einer Ausführungseinheit hin damit reagiert, danach Instruktionen aus dem Ausnahme-Behandlungs-Instruktionsstrom zum Transferieren zu einer Ausführungseinheit zu holen.

27. Verfahren, wie in Anspruch 26 definiert, worin die Ausgabeeinheit weiterhin ein Kontextspeicherteil enthält, das Kontextinformationen vor dem Holen von Instruktionen aus dem Ausnahme-Behandlungs-Instruktionsstrom zum Transferieren zu der Ausführungseinheit speichert.

## Revendications

1. Unité de traitement de données (11) pour exécuter une séquence d'instructions d'une manière parallèle, ladite unité de traitement de données comportant une unité d'émission (22) et au moins une unité d'exécution (25) destinée à traiter itérativement des instructions de ladite séquence qui lui sont transférées, unité de traitement qui est caractérisée en ce que :
l'unité d'émission (22) comporte
1. une partie de transfert d'instructions (221) destinée à acquérir itérativement des instructions de ladite séquence et à les transférer sélectivement à ladite unité d'exécution en vue de leur traitement, ladite séquence comprenant au moins une instruction prédéterminée, adaptée pour provoquer une suspension temporaire de ladite exécution de ladite séquence, et
2. une partie d'inhibition (223) sensible à l'acquisition par ladite partie de transfert d'instructions de ladite instruction prédéterminée pour empêcher ladite partie de transfert d'instructions de transférer lesdites instructions à ladite unité d'exécution afin de suspendre temporairement ladite exécution au moins jusqu'à ce que ladite unité d'exécution ait terminé ledit traitement d'instructions qui lui ont été transférées préalablement, et pour déterminer s'il faut permettre à ladite partie de transfert d'instructions de reprendre le transfert desdites instructions sur la base de résulats dudit traitement desdites instructions transférées préalablement.

2. Unité de traitement de données telle que définie dans la revendication 1, dans laquelle l'un desdits résultats est une indication d'opération terminée que ladite unité d'exécution est apte à générer en réponse à la fin du traitement de chaque instruction, ladite unité d'émission comportant également une partie d'invalidation (222) sensible à la réception de ladite indication d'opération terminée pour invalider ladite partie d'inhibition, afin de permettre ensuite à ladite partie de transfert d'instructions (221) de reprendre le transfert d'instructions à ladite unité d'exécution.

3. Unité de traitement de données telle que définie dans la revendication 2, dans laquelle lesdites instructions peuvent comporter deux flux d'instructions comprenant un flux d'instructions de programme et un flux d'instructions de gestion d'exception, ladite partie de transfert d'instructions comportant une partie de réponse à une exception destinée normalement à acquérir des instructions provenant dudit flux d'instructions de programme, et sensible à la réception d'une indication d'exception provenant d'une quelconque unité d'exécution pour ensuite acquérir des instructions provenant dudit flux d'instructions de gestion d'exception en vue de les transférer à ladite unité d'exécution.

4. Unité de traitement de données telle que définie dans la revendication 3, dans laquelle ladite partie de réponse à une exception comporte également une partie de stockage de contexte pour stocker des informations de contexte avant d'acquérir des instructions provenant dudit flux d'instructions de gestion d'exception en vue de les transférer à ladite unité d'exécution.

5. Unité de traitement de données telle que définie dans la revendication 1, dans laquelle l'un desdits résultats est une indication d'exception que ladite unité d'exécution est apte à générer en réponse à l'apparition d'une condition d'exception pendant ledit traitement desdites instructions, ladite partie d'inhibition déterminant de permettre à ladite partie de transfert d'instructions de reprendre ledit transfert desdites instructions si ladite unité d'exécution a terminé ledit traitement desdites instructions transférées préalablement sans générer ladite indication d'exception.

6. Unité de traitement de données telle que définie dans la revendication 5, dans laquelle ladite partie d'inhibition est adaptée pour répondre à ladite indication d'exception provenant de ladite unité d'exécution en continuant à empêcher ladite partie de transfert d'instructions de transférer lesdites instructions après que ladite unité d'exécution a terminé ledit traitement desdites instructions transférées préalablement.

7. Unité de traitement de données telle que définie dans la revendication 1, comportant en outre de multiples unités d'exécution traitant chacune itérativement lesdites instructions de ladite séquence qui leur sont transférées par ladite partie de transfert d'instructions, ladite partie d'inhibition étant adaptée pour être également sensible à ladite instruction prédéterminée afin :
d'empêcher ladite partie de transfert d'instructions de transférer lesdites instructions auxdites multiples unités d'exécution au moins jusqu'à ce que toutes lesdites multiples unités d'exécution aient terminé ledit traitement des instructions qui leur ont été transférées préalablement; et
de déterminer s'il faut permettre à ladite partie de transfert d'instructions de reprendre le transfert desdites instructions auxdites multiples unités d'exécution sur la base de résultats dudit traitement desdites instructions transférées préalablement.

8. Unité de traitement de données telle que définie dans la revendication 7, dans laquelle l'un desdits résultats est une indication d'exception que lesdites unités d'exécution sont aptes à générer en réponse à l'apparition d'une condition d'exception pendant ledit traitement desdites instructions, ladite partie d'inhibition déterminant de permettre à ladite partie de transfert d'instructions (221) de reprendre ledit transfert desdites instructions à l'ensemble desdites unités d'exécution (25, 26), si lesdites unités d'exécution ont terminé ledit traitement desdites instructions transférées préalablement sans générer ladite indication d'exception.

9. Unité de traitement de données telle que définie dans la revendication 8, dans laquelle ladite partie d'inhibition est adaptée pour répondre auxdites indications d'exception provenant desdites unités d'exécution en continuant à empêcher lesdites multiples parties de transfert d'instructions de transférer lesdites instructions après que lesdites multiples unités d'exécution ont terminé ledit traitement desdites instructions transférées préalablement.

10. Unité de traitement de données telle que définie dans la revendication 8, dans laquelle l'un desdits résultats est une indication d'opération terminée que lesdites unités d'exécution sont aptes à générer en réponse à la fin du traitement de chaque instruction, et ladite unité d'émission (22) comportant également une partie d'invalidation (222) qui reçoit des indications d'opération terminée provenant de toutes lesdites unités d'exécution (25, 26), ladite partie d'invalidation (222) invalidant ladite partie d'inhibition en réponse à la réception de ladite indication d'opération terminée provenant de l'ensemble des unités d'exécution (25, 26) en train de traiter des instructions pour ensuite permettre à ladite partie de transfert d'instructions (221) de reprendre le transfert d'instructions auxdites unités d'exécution.

11. Unité de traitement de données telle que définie dans la revendication 10, dans laquelle ladite unité d'émission (22) conserve des informations d'instructions inachevées identifiant des instructions qui ont été transférées à une unité d'exécution mais pour lesquelles un traitement n'a pas été terminé, ladite partie d'invalidation (222) utilisant lesdites informations d'instructions inachevées pour déterminer si elle a reçu une indication d'opération terminée de l'ensemble des unités d'exécution en train de traiter des instructions.

12. Unité de traitement de données telle que définie dans la revendication 11, dans laquelle lesdites instructions peuvent comporter deux flux d'instructions comprenant un flux d'instructions de programme et un flux d'instructions de gestion d'exception, ladite unité d'émission (22) comportant une partie de réponse à une exception, destinée normalement à acquérir des instructions provenant dudit flux d'instructions de programme, et sensible à la réception d'une indication d'exception provenant de l'une quelconque des unités d'exécution pour ensuite acquérir des instructions provenant dudit flux d'instructions de gestion d'exception en vue de les transférer à une unité d'exécution.

13. Unité de traitement de données telle que définie dans la revendication 12, dans laquelle ladite partie de réponse à une exception comporte également une partie de stockage de contexte (600) pour stocker des informations de contexte avant d'acquérir des instructions provenant dudit flux d'instructions de gestion d'exception en vue de les transférer à une unité d'exécution.

14. Unité de traitement de données telle que définie dans la revendication 1, comportant de multiples unités d'exécution (25, 26) respectivement destinées à traiter itérativement des instructions de ladite séquence et à générer en réponse à celles-ci une indication d'exception en réponse à l'apparition d'une condition d'exception,
dans laquelle ladite unité d'émission (22) comporte aussi
3. une partie d'acquisition d'instructions (221) destinée à acquérir itérativement des instructions de ladite séquence provenant de l'un de multiples flux d'instructions comprenant un flux d'instructions de programme et un flux d'instructions de gestion d'exception, ladite partie d'acquisition d'instructions comportant une partie de réponse à une exception destinée normalement à acquérir des instructions provenant dudit flux d'instructions de programme, et sensible à la réception d'une indication d'exception provenant de l'une quelconque des unités d'exécution pour ensuite acquérir des instructions provenant dudit flux d'instructions de gestion d'exception;
dans laquelle ladite partie de transfert d'instructions (221) est apte à
transférer sélectivement les instructions acquises par ladite partie d'acquisition d'instructions auxdites unités d'exécution en vue de leur traitement;
dans laquelle ladite partie d'inhibition (223), sensible à l'acquisition par ladite partie de transfert d'instructions de ladite instruction prédéterminée, est apte à empêcher ladite partie de transfert d'instructions de transférer lesdites instructions auxdites multiples unités d'exécution pour suspendre temporairement ladite exécution au moins jusqu'à ce que lesdites unités d'exécution aient terminé ledit traitement des instructions qui leur ont été transférées préalablement; et
dans laquelle ladite unité d'émission (22) comporte en outre
4. une partie d'invalidation (222) sensible au fait que lesdites unités d'exécution ont terminé ledit traitement desdites instructions transférées préalablement sans générer ladite indication d'exception, pour invalider ladite partie d'inhibition afin de permettre ensuite à ladite partie de transfert d'instructions de reprendre le transfert d'instructions auxdites multiples unités d'exécution.

15. Procédé d'exploitation d'une unité de traitement de données (11) dans laquelle de multiples instructions peuvent être exécutées simultanément et comportant au moins une unité d'exécution (25) destinée à traiter itérativement des instructions d'une séquence d'instructions qui lui sont transférées, et une unité d'émission (22) comprenant une partie de transfert d'instructions (221) et une partie d'inhibition (223), procédé qui est caractérisé en ce que l'unité d'émission :
A. acquiert itérativement des instructions de ladite séquence, ladite séquence comportant au moins une instruction prédéterminée, adaptée pour provoquer une suspension temporaire dudit traitement de ladite séquence;
B. détermine pour chaque instruction acquise si l'instruction est ladite instruction prédéterminée et, si l'instruction acquise n'est pas ladite instruction prédéterminée, transfère l'instruction à ladite unité d'exécution (25) en vue de son traitement;
C. répond à ladite instruction prédéterminée en empêchant des transferts d'autres instructions de ladite séquence à ladite unité d'exécution pour suspendre temporairement ledit traitement au moins jusqu'à ce que ladite unité d'exécution ait terminé le traitement des instructions qui lui ont été transférées préalablement, et
D. détermine s'il faut reprendre lesdits transferts desdites instructions sur la base de résultats dudit traitement desdites instructions transférées préalablement.

16. Procédé tel que défini dans la revendication 15, selon lequel l'un desdits résultats est une indication d'opération terminée que ladite unité d'exécution est apte à générer en réponse à la fin du traitement de chaque instruction, ladite unité d'émission reprenant à nouveau le transfert d'instructions à ladite unité d'exécution lors de la réception de ladite indication d'opération terminée.

17. Procédé tel que défini dans la revendication 16, selon lequel lesdites instructions peuvent comporter deux flux d'instructions comprenant un flux d'instructions de programme et un flux d'instructions de gestion d'exception, ladite unité d'émission acquérant normalement des instructions provenant dudit flux d'instructions de programme et étant sensible à la réception d'une indication d'exception provenant d'une quelconque unité d'exécution pour ensuite acquérir des instructions provenant dudit flux d'instructions de gestion d'exception en vue de les transférer à ladite unité d'exécution.

18. Procédé tel que défini dans la revendication 17, selon lequel ladite partie de réponse à une exception comporte également une partie de stockage de contexte pour stocker des informations de contexte avant d'acquérir des instructions provenant dudit flux d'instructions de gestion d'exception en vue de les transférer à ladite unité d'exécution.

19. Procédé tel que défini dans la revendication 15, selon lequel l'un desdits résultats est une indication d'exception que ladite unité d'exécution est apte à générer en réponse à l'apparition d'une condition d'exception pendant ledit traitement desdites instructions, ladite unité d'émission déterminant de reprendre ledit transfert desdites instructions si ladite unité d'exécution a terminé ledit traitement desdites instructions transférées préalablement sans générer ladite indication d'exception.

20. Procédé tel que défini dans la revendication 19, selon lequel ladite unité d'émission répond à ladite indication d'exception provenant de ladite unité d'exécution en continuant à empêcher lesdits transferts desdites instructions après que ladite unité d'exécution a terminé ledit traitement desdites instructions transférées préalablement.

21. Procédé tel que défini dans la revendication 15, selon lequel ladite unité de traitement de données comporte en outre de multiples unités d'exécution traitant chacune itérativement lesdites instructions de ladite séquence qui leur sont transférées par ladite unité d'émission, ladite unité d'émission étant également sensible à ladite instruction prédéterminée pour
empêcher des transferts desdites instructions auxdites unités d'exécution au moins jusqu'à ce que toutes lesdites unités d'exécution aient terminé ledit traitement des instructions qui leur ont été transférées préalablement, et
déterminer s'il faut reprendre lesdits transferts desdites instructions auxdites unités d'exécution sur la base de résultats dudit traitement desdites instructions transférées préalablement.

22. Procédé tel que défini dans la revendication 21, selon lequel l'un desdits résultats est une indication d'exception que chacune desdites unités d'exécution est apte à générer en réponse à l'apparition d'une condition d'exception pendant ledit traitement desdites instructions, ladite unité d'émission déterminant de reprendre lesdits transferts desdites instructions à l'ensemble desdites unités d'exécution si lesdites unités d'exécution ont terminé ledit traitement desdites instructions transférées préalablement sans générer ladite indication d'exception.

23. Procédé tel que défini dans la revendication 22, selon lequel ladite unité d'émission répond auxdites indications d'exception provenant desdites unités d'exécution en continuant à empêcher lesdits transferts desdites instructions après que lesdites unités d'exécution ont terminé ledit traitement desdites instructions transférées préalablement.

24. Procédé tel que défini dans la revendication 22, selon lequel l'un desdits résultats est une indication d'opération terminée que chacune desdites unités d'exécution est apte à générer en réponse à la fin du traitement de chaque instruction, ladite unité d'émission reprenant à nouveau le transfert d'instructions auxdites unités d'exécution lors de la réception de ladite indication d'opération terminée provenant de l'ensemble desdites unités d'exécution en train de traiter des instructions.

25. Procédé tel que défini dans la revendication 24, selon lequel ladite unité d'émission conserve des informations d'instructions inachevées identifiant des instructions qui ont été transférées à une unité d'exécution mais pour lesquelles un traitement n'a pas été terminé, ladite unité d'émission utilisant lesdites informations d'instructions inachevées pour déterminer si elle a reçu une indication d'opération terminée de l'ensemble des unités d'exécution en train de traiter des instructions.

26. Procédé tel que défini dans la revendication 25, dans lequel lesdites instructions peuvent comporter deux flux d'instructions comprenant un flux d'instructions de programme et un flux d'instructions de gestion d'exception, ladite unité d'émission acquérant normalement des instructions provenant dudit flux d'instructions de programme, et étant sensible à la réception d'une indication d'exception provenant de l'une quelconque des unités d'exécution pour ensuite acquérir des instructions provenant dudit flux d'instructions de gestion d'exception en vue de les transférer à une unité d'exécution.

27. Procédé tel que défini dans la revendication 26, selon lequel ladite unité d'émission comporte en outre une partie de stockage de contexte pour stocker des informations de contexte avant d'acquérir des instructions provenant dudit flux d'instructions de gestion d'exception en vue de les transférer à une unité d'exécution.
